# EUROPEAN PATENT SPECIFICATION

(11) **EP 0 463 767 B1**
(45) Date of publication and mention of the grant of the patent: **06.04.1994**
(21) Application number: 91305257.7
(22) Date of filing: 11.06.1991
(51) Int. Cl.: F02F 3/00

(54) **Pistons for engines or motors**
Kolben für Brennkraftmaschine
Piston pour moteur

(30) Priority: 23.06.1990 GB 9014048; 23.06.1990 GB 9014049
(43) Date of publication of application: 02.01.1992
(73) Proprietor: T&N TECHNOLOGY, Rugby CV22 7SB (GB)
(72) Inventor: Rhodes, Michael Ledsham Price, Rugby, Warwickshire CV21 3UA (GB); Parker, David Alec, Broadwell, Rugby, Warwickshire (GB)
(74) Representative: Drury, Peter Lawrence

(56) References cited:
- FR-A- 651 046
- FR-A- 651 929
- GB-A- 2 104 188
- GB-A- 2 129 523
- US-A- 3 152 523

## Description

The present invention is concerned with a piston for an engine or motor, eg for an internal combustion engine.

A piston for an internal combustion engine normally comprises a crown and a skirt. The crown may be made of metal, such as aluminium, an alloy of aluminium, or a ferrous material, or may be made of a ceramic material. The crown provides a surface against which the force of the combustion gases acts and provides grooves in which rings are mounted to seal the piston against the surface of a bore in which the piston reciprocates. The skirt of such a piston serves to guide the piston in said bore.

In many cases, the crown and skirt of a piston are of integral construction of the same material. Normally, the skirt provides two spaced bores which receive a gudgeon pin by which the piston is connected to a connecting rod. It is, however, known (see GB Patent Specification No, 1,422,776) to provide a gudgeon pin boss which depends from the crown and provides the bore for receiving the gudgeon pin, the metal piston skirt encircling the boss. This arrangement allows a shorter and, therefore, lighter gudgeon pin to be used. Such a boss may be in two portions to support opposite ends of the gudgeon pin.

It is known for the skirt to be made as a different piece from the crown and to be secured thereto, this being done in the interests of ease of manufacture. The different piece may also be of a different material from the crown or to be coated with a different material. Where the skirt is a different piece, it may be joined to the crown by an intermediate member which clips into a groove in the crown (see FR-A-651,046). Alternatively, the skirt may be supported by the gudgeon pin (see GB 2,188,122A). GB-A-219,523 discloses a rigid plastics skirt supported by the gudgeon pin of a piston having a metal crown. The gudgeon pin is connected to the crown by a boss which depends from the crown. GB-A-2,129,523 also discloses rigid metal skirts which have a plastics coating thereon provided by a sleeve and plastic skirts.

As such pistons reciprocate in the operation of an engine or motor, they are subject to lateral forces tending to press them against the wall of the bore in which they reciprocate. This creates noise, known as "slap noise", which becomes more significant with modern quieter engines. The use of a rigid plastics or plastics coated skirt reduces slap noise because of the inherent sound-damping characteristics of plastics materials, but the slap noise is still significant.

It is an object of the present invention to provide a piston in which slap noise is reduced.

The invention provides a piston for an engine or motor comprising a crown made from metal or ceramic material, the crown being integral with a depending boss arranged to receive a gudgeon pin by which the piston is connected to a connecting rod, the piston also comprising a skirt made from plastics material which depends from the crown and encircles the boss, characterised in that the skirt is secured directly to the crown, is spaced from the boss and the gudgeon pin and can flex relative to the boss.

A piston in accordance with the invention has a skirt which can give when impacted with the side wall of the bore in which it reciprocates so that slap noise is reduced. This reduction is in addition to the slap noise reduction given by the use of plastics material. Furthermore, the use of such a skirt because of its conformability can allow smaller operating clearances in the bore which also reduces slap noise, and enhances the sealing capabilities of the ring pack of the piston. The small gudgeon pin and reduced weight skirt also provides a significant weight reduction which, by reducing the reciprocating mass, improves fuel consumption, and the possible speed of operation. Furthermore, lighter connecting rods and smaller bearings may be possible.

Preferably, the skirt of the piston is injection moulded directly on to the crown, ie the crown is placed in the mould of an injection moulding machine and the skirt is moulded on to it. If the crown is formed with a protrusion which is embedded in the skirt to secure the skirt to the crown, the skirt can be firmly attached whether or not it is directly moulded on to the crown.

In order to reduce the friction between the piston and its associated cylinder, the skirt may be formed with integral pads on two thrust surfaces thereof to transmit lateral thrusts of the piston against the wall of the associated cylinder. Alternatively, the skirt may be formed with apertures in two thrust faces thereof and inserts in these apertures may form pads to transmit lateral thrusts of the piston against the wall of an associated cylinder, the inserts being of a different material to the skirt. Different inserts in the same skirt may be of different materials. The inserts may be injection moulded into the apertures, preferably from the inwardly-directed face of the skirt. Each pad may be bevelled to cause lubricant to be forced over the pad by hydrodynamic action during reciprocation of the piston, so that wear is reduced. A metal skirt of similar construction is described in GB 2,104,188A.

The skirt and separate inserts may be made from a plastics material selected from polyetheretherketone, polyetherketone, a polyparaydroxy benzoic acid, polyethyleneterephthalate, a silicon modified polyester, polyetherimide, a polyarimid, a polyimide, a polyamideimide, polyphenylene sulphide, a plastics alloy of polyetherketone and a polyarylene sulphide, and Nylon 6 modified with terephthalic acid. The plastics material may be reinforced with fillers or fibres, eg of glass or carbon, and may be post cured. Separate inserts may also be made of ceramics material.

There now follows a detailed description, to be read with reference to the accompanying drawings, of three illustrative embodiments of the invention.

In the drawings:

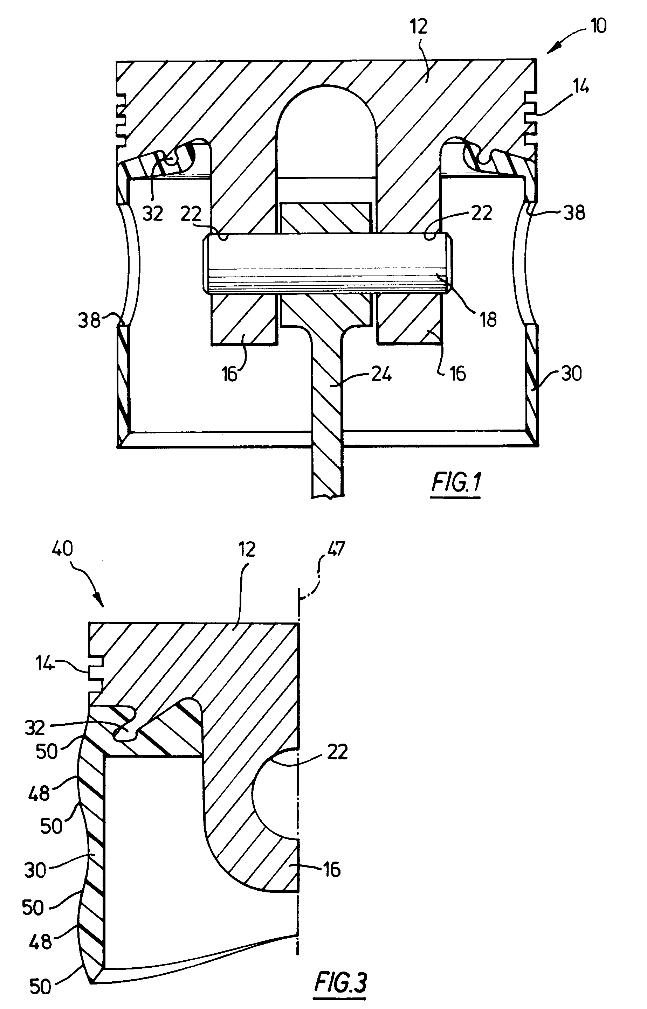

Figure 1 is a vertical cross-section taken through a first illustrative piston;
Figure 2 is a side elevational view of a second illustrative piston;
Figure 3 is a half section taken on the line III-III in Figure 2; and
Figure 4 is a view similar to Figure 3 but of a third illustrative piston.

The first illustrative piston 10 is for an internal combustion engine and comprises a crown 12 made from aluminium alloy and a skirt 30 made from polyetheretherketone. The skirt 30 is secured directly to the crown 12 by injection moulding the skirt on to the crown 12 so that a protrusion 32 of the crown is embedded in the skirt 30. The protrusion 32 is in the form of an annular rib extending from the lower side of the crown 12 and has a bulbous shape so that it keys into the plastics material of the skirt 30. In an alternative construction, the protrusion 32 could be replaced by an undercut groove.

The crown 12 has a ring belt 14 for the usual piston rings and is formed integrally with a depending boss 16 arranged to receive a gudgeon pin 18 by which the piston 10 is connected to a connecting rod 24. The boss 16 has two spaced portions each having a bore 22 therein to receive the gudgeon pin 18 and between which the small end of the connecting rod 24 is positioned.

The boss 16 projects downwardly centrally of the crown 12 and the skirt 30 encircles the boss 16 and the gudgeon pin 18 and is spaced therefrom. The skirt 30 is, therefore, supported solely by portions of the crown 12 away from the boss 16 and can flex relative to the boss 16.

The skirt 30 is provided with two circular apertures 38 to enable assembly of the gudgeon pin 18 in the bores 22.

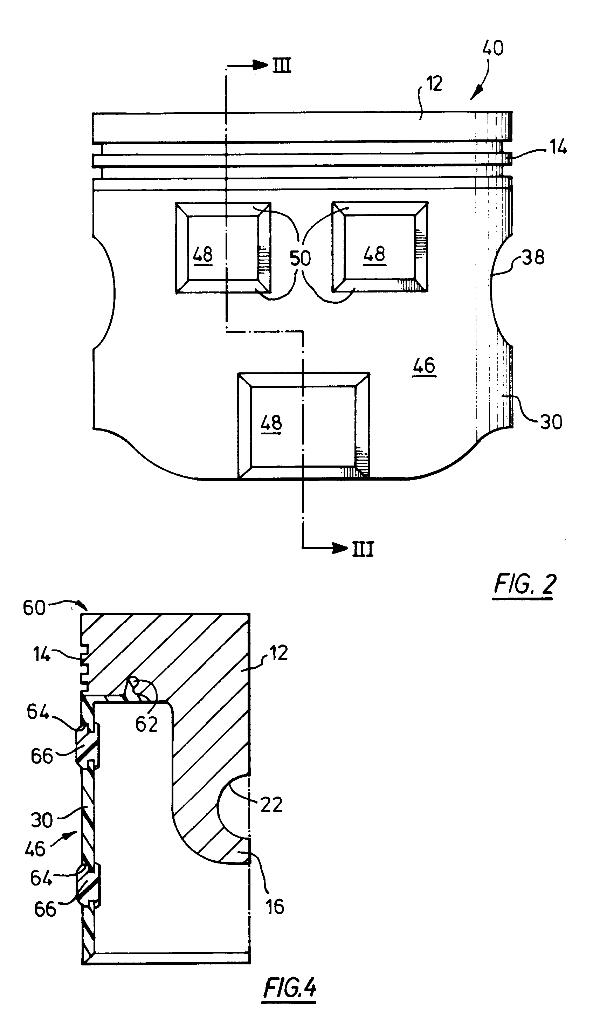

The second illustrative piston 40 shown in Figures 2 and 3 is similar in many respects to the first illustrative piston 10 and like parts are given the same reference numerals.

The piston 40 has a crown 12 with a ring band 14 and a protrusion 32 which has the same purpose as the protrusion of the piston 10 but is angled outwardly. The crown 12 also has a boss 16 equipped with bores 22 to receive a gudgeon pin.

The piston 40 also has a skirt 30 which is injection moulded on to the crown 12. The skirt 30 is similar to the skirt 30 of the piston 10, having apertures 38, but has a sinusoidal lower edge so that two thrust faces 46 thereof extend further from the crown 12 than the remainder of the skirt 30.

The thrust faces 46 are diametrically-opposed with respect to a central axis 47 of the piston 40. Each thrust face 46 is formed with three integral pads 48 which project further from the axis 47 than the remainder of the skirt 30. These pads 48 are to transmit lateral thrusts of the piston 40 against the wall of an associated cylinder (not shown). Each pad 48 has bevelled edges 50. The upper and lower bevelled edges 50 cause lubricant to be forced over the pad 48 by hydrodynamic action during reciprocation of the piston 40 in similar manner to that described in GB 2,104,188A. The pads 50 are dome-shaped as shown in Figure 3 and may be machined after injection moulding of the skirt 30 to remove flash or improve their shape.

Figure 4 shows the third illustrative piston 60 which has a crown 12 and a skirt 30. The crown 12 has a boss 16 equipped with bores 22 to receive a gudgeon pin. The skirt 30 of the piston 60 differs from those of the pistons 10 and 40 in that it extends into a groove 62 in the underside of the crown 12, the skirt 30 being injection moulded on to the crown 12 so that plastics material of the skirt 30 enters the groove 62 which is undercut so that the skirt 30 is secured to the crown 12.

The skirt 30 of the piston 60 is formed with three apertures 64 in each of its two thrust faces 46 and inserts 66 in these apertures 64 form pads to transmit lateral thrusts of the piston 60 in the same manner as the pads 48 of the piston 40. These inserts 66 have the same shape as the pads 48 on the outwardly-facing surface of the skirt 30. The inserts 66 are injection moulded into the apertures 64 from the inwardly-facing side of the skirt 30.

## Claims

1. A piston for an engine or motor comprising a crown (12) made from metal or ceramic material, the crown being integral with a depending boss (16) arranged to receive a gudgeon pin (18) by which the piston is connected to a connecting rod (24), the piston also comprising a skirt (30) made from plastics material which depends from the crown (12) and encircles the boss (16), characterised in that the skirt (30) is secured directly to the crown (12), is spaced from the boss (16) and the gudgeon pin (18), and can flex relative to the boss (16).

2. A piston according to Claim 1, characterised in that the skirt (30) is injection moulded directly on to the crown (12).

3. A piston according to either one of Claims 1 and 2, characterised in that the crown (12) is formed with a protrusion (32) which is embedded in the skirt (30) to secure the skirt to the crown.

4. A piston according to any one of Claims 1 to 3, characterised in that the skirt (30) is formed with integral pads (48) on two thrust faces (46) thereof to transmit lateral thrusts of the piston against a wall of an associated cylinder.

5. A piston according to any one of Claims 1 to 3, characterised in that the skirt (30) is formed with apertures (64) in two thrust faces (46) thereof and inserts (66) in these apertures form pads to transmit lateral thrusts of the piston against the wall of an associated cylinder.

6. A piston according to Claim 5, characterised in that the inserts (66) are injection moulded into the apertures (64).

7. A piston according to any one of Claims 4 to 6, characterised in that each pad (48;66) is bevelled to cause lubricant to be forced over the pad by hydrodynamic action during reciprocation of the piston.

## Patentansprüche

1. Kolben für eine Maschine oder einen Motor mit einem Kolbenboden (12), der aus Metall oder einem keramischen Material hergestellt ist, wobei der Kolbenboden integral mit einer abhängenden Bosse (16) ist, die angeordnet ist, um einen Kolbenbolzen (18) aufzunehmen, durch den der Kolben mit einer Pleuelstange (24) verbunden ist, wobei der Kolben auch einen Kolbenschaft (30) aufweist, der aus einem Kunststoffmaterial hergestellt ist, das vom Kolbenboden (12) abhängt und die Bosse (16) umgibt,
**dadurch gekennzeichnet,**
daß der Kolbenschaft (30) direkt am Kolbenboden (12) befestigt ist, von der Bosse (16) und dem Kolbenbolzen (18) beabstandet ist und sich relativ zur Bosse (16) verbiegen kann.

2. Kolben nach Anspruch 1,
**dadurch gekennzeichnet,**
daß der Kolbenschaft (30) im Spritzgießverfahren direkt auf den Kolbenboden (12) aufgeformt ist.

3. Kolben nach Anspruch 1 oder 2,
**dadurch gekennzeichnet,**
daß der Kolbenboden (12) mit einem Vorsprung (32) ausgebildet ist, der in den Kolbenschaft (30) eingebettet ist, um den Kolbenschaft am Kolbenboden zu befestigen.

4. Kolben nach einem der Ansprüche 1 bis 3,
**dadurch gekennzeichnet,**
daß der Kolbenschaft (30) mit integralen Kissen (48) auf zwei Stoßflächen (46) davon ausgebildet ist, um seitliche Stöße des Kolbens gegen eine Wand eines zugehörigen Zylinders zu übertragen.

5. Kolben nach einem der Ansprüche 1 bis 3,
**dadurch gekennzeichnet,**
daß der Kolbenschaft (30) mit Öffnungen (64) in zwei Stoßflächen (46) davon ausgebildet ist, und Einsätze (66) in diesen Öffnungen Kissen bilden, um seitliche Stöße des Kolbens gegen die Wand eines zugehörigen Zylinders zu übertragen.

6. Kolben nach Anspruch 5,
**dadurch gekennzeichnet,**
daß die Einsätze (66) im Spritzgießverfahren in die Öffnungen (64) eingeformt sind.

7. Kolben nach einem der Ansprüche 4 bis 6,
**dadurch gekennzeichnet,**
daß jedes Kissen (48; 66) abgeschrägt ist, damit ein Schmiermittel durch hydrodynamische Wirkung während einer Hin- und Herbewegung des Kolbens über das Kissen gedrängt wird.

## Revendications

1. Piston pour moteur comprenant une couronne (12) en métal ou en céramique, la couronne étant d'un seul tenant avec un bossage pendant (16) agencé pour recevoir un axe de pied de bielle (18) par lequel le piston est relié à une bielle (24), le piston comprenant également une jupe (30) faite de matière plastique qui pend depuis la couronne (12) et entoure le bossage (16) , caractérisé en ce que la jupe (30) est fixée directement à la couronne (12), est espacée du bossage (16) et de l'axe de pied de bielle (18) et peut fléchir relativement au bossage (16).

2. Piston selon la revendication 1, caractérisé en ce que la jupe (30) est moulée par injection directement sur la couronne (12).

3. Piston selon l'une quelconque des revendications 1 et 2, caractérisé en ce que la couronne (12) est dotée d'une projection (32) qui est encastrée dans la jupe (30) pour fixer la jupe à la couronne.

4. Piston selon l'une quelconque des revendications 1 à 3, caractérisé en ce que la jupe (30) est dotée de tampons (48) d'un seul tenant sur deux côtés d'attaque de poussée (46) afin de transmettre les poussées latérales du piston contre une paroi d'un cylindre associé.

5. Piston selon l'une quelconque des revendications 1 à 3, caractérisé en ce que la jupe (30) est dotée d'ouvertures (64) dans deux côtés d'attaque de poussée (46) et des inserts (66) dans ces ouvertures forment des tampons pour transmettre les poussées latérales du piston contre la paroi d'un cylindre associé.

6. Piston selon la revendication 5, caractérisé en ce que les inserts (66) sont moulés par injection dans les ouvertures (64).

7. Piston selon l'une quelconque des revendications 4 à 6, caractérisé en ce que chaque tampon (48;66) est biseauté pour obliger le lubrifiant à passer sur le tampon par effet hydrodynamique durant le va-et-vient du piston.
